(19) **Europäisches Patentamt / European Patent Office / Office européen des brevets**

(11) **EP 4 648 247 A1**

(12) **EUROPEAN PATENT APPLICATION**
published in accordance with Art. 153(4) EPC

(43) Date of publication:
**12.11.2025 Bulletin 2025/46**

(21) Application number: **23915705.0**

(22) Date of filing: **15.11.2023**

(51) International Patent Classification (IPC):
**H02J 3/24** (2006.01)

(86) International application number:
**PCT/CN2023/131685**

(87) International publication number:
**WO 2024/148947 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2023 CN 202310036905**

(71) Applicant: **Huawei Digital Power Technologies Co., Ltd.**
**Shenzhen, Guangdong 518043 (CN)**

(72) Inventors:
• **HE, Jinwei**
**Tianjin 300072 (CN)**
• **TAN, Tian**
**Shenzhen, Guangdong 518043 (CN)**
• **WANG, Shuo**
**Shenzhen, Guangdong 518043 (CN)**
• **XIN, Kai**
**Shenzhen, Guangdong 518043 (CN)**

(74) Representative: **Gill Jennings & Every LLP**
**The Broadgate Tower**
**20 Primrose Street**
**London EC2A 2ES (GB)**

(54) **GRID-CONNECTED AND OFF-GRID SWITCHING CONTROL METHOD, CONVERSION APPARATUS AND POWER SUPPLY SYSTEM**

(57) This application relates to the field of power systems, and in particular, to a switching control method for a converter apparatus in a power supply system and the apparatus. This solution may be applied to a power conversion system in scenarios such as a new energy microgrid or an electrochemical energy storage station. In the method, a voltage of the converter apparatus at a control switching moment is stored, the voltage is used as an initial value after switching is performed, and the voltage is transited to a rated voltage in a first time period, so that voltage distortion, current distortion, and regulation time in a control switching process can be reduced. In addition, an initial phase value is given, to avoid a circulating current between converter apparatuses under asynchronous switching in a power supply system including a plurality of converter apparatuses.

200

| S210: Obtain information that indicates a converter apparatus to switch from an on-grid control mode to an off-grid control mode |
| --- |
| S220: Obtain an output voltage of the converter apparatus at a first moment |
| S230: Determine an output voltage of the converter apparatus in the off-grid control mode |

FIG. 2

**Description**

This application claims priority to Chinese Patent Application No. 202310036905.3, filed with the China National Intellectual Property Administration on January 10, 2023 and entitled "ON/OFF-GRID SWITCHING CONTROL METHOD, CONVERTER APPARATUS, AND POWER SUPPLY SYSTEM", which is incorporated herein by reference in its entirety.

**TECHNICAL FIELD**

This application relates to the field of power systems, and more specifically, to an on/off-grid switching control method applied to a converter apparatus, and the converter apparatus and a power supply system that correspond to the method.

**BACKGROUND**

Currently, with rapid development of new energy, a power conversion system (power conversion system, PCS) in scenarios such as a new energy microgrid and an electrochemical energy storage station attracts wide attention. Based on a connection relationship with an alternating current power grid, the PCS has two operating modes: on-grid and off-grid. In different operating modes, the PCS needs to operate in different control modes. When the PCS performs control switching, switching between a control loop and a command may cause a sudden change in an output voltage of an alternating current port of the PCS. Consequently, a voltage and a current of the system greatly fluctuate, and severe voltage distortion, excessively long dynamic regulation time, or even system instability may be further caused.

Therefore, how to perform control switching of the PCS to reduce control switching time and voltage and current fluctuation in a switching process becomes an urgent problem to be resolved.

**SUMMARY**

This application provides an on/off-grid switching control method applied to a converter apparatus, to reduce control switching time and voltage and current fluctuation in a switching process.

According to a first aspect, an on/off-grid switching control method is provided. The method is applied to switching between two control modes in a converter apparatus, and the two control modes are an on-grid control mode and an off-grid control mode. The on-grid control mode is controlling the converter apparatus to convert a direct current output by an energy storage system into an alternating current and connect the alternating current to an alternating current power grid, and the off-grid control mode is controlling the converter apparatus to convert the direct current output by the energy storage system into the alternating current and supply power to a local load, where the alternating current output by the converter apparatus is not connected to the alternating current power grid. The method includes: obtaining power grid scheduling information, where the power grid scheduling information indicates the converter apparatus to switch from the on-grid control mode to the off-grid control mode; obtaining an output voltage of the converter apparatus at a first moment, where the first moment is a moment at which the converter apparatus switches from the on-grid control mode to the off-grid control mode or a moment at which the power grid scheduling information is received; and determining an output voltage of the converter apparatus in the off-grid control mode based on the output voltage of the converter apparatus at the first moment. A difference that is between the output voltage of the converter apparatus at the first moment and the output voltage of the converter apparatus in the off-grid control mode and that is within preset time is less than a specified threshold.

In a possible implementation, the converter apparatus is located in a power supply system including a new energy microgrid or an electrochemical energy storage station, and the alternating current power grid, and the converter apparatus is a power conversion system. The energy storage system may include a multi-battery system, or may include coupling between the multi-battery system and a photovoltaic power generation unit.

It should be understood that a control voltage may be generated in the converter apparatus in embodiments of this application, and after the control voltage is modulated and demodulated, the converter apparatus is controlled to output a corresponding voltage. In the foregoing solution, the obtaining an output voltage of the converter apparatus at a first moment may include controlling a control voltage of the output voltage of the converter apparatus at the first moment.

Further, when the converter apparatus connects the energy storage system to the alternating current power grid, the converter apparatus is in an on-grid operation mode. To improve active power and reactive power command following performance of the energy storage system for better involvement in regulation of the alternating current power grid, the converter apparatus needs to operate in a current control mode based on the control voltage output by the controller. In other words, the on-grid control mode in the foregoing solution is the current control mode. Specifically, the controller in the current control mode includes a PQ control loop and a current loop. The PQ control loop implements closed-loop following control by executing an active power command and a reactive power command that are output by the converter apparatus.

An output current of the PQ control loop is a reference current input by the current loop, the current loop performs closed-loop control on an output current of the current apparatus, and the control voltage output by the controller is superimposing an output voltage of the current loop and an output voltage of an alternating current port of the converter apparatus.

When the system is disconnected from a utility grid and supplies power only to the local load, the converter apparatus is in an off-grid operation mode. To improve voltage and frequency stability, and a transient support capability of an islanding system and improve reliability of power supply of the local load, the converter apparatus needs to operate in a voltage control mode based on the control voltage output by the controller. In other words, the off-grid control mode is the voltage control mode. Specifically, in the voltage control mode, the controller includes a virtual synchronous generator control loop, a voltage reference generator, a voltage loop, and the current loop. The virtual synchronous generator control loop performs virtual synchronous generator control, and the voltage reference generator calculates a reference voltage input to the voltage loop based on a voltage amplitude and a frequency that are output by the virtual synchronous generator control loop, and a latch value of a latch. The voltage loop and the current loop separately perform closed-loop control on the output voltage and the output current of the converter apparatus, and an output current of the current loop is a reference current input to the voltage loop.

Based on the foregoing solution, the difference that is between the output voltage of the converter apparatus at the first moment and the output voltage of the converter apparatus in the off-grid control mode and that is within the preset time is less than the specified threshold. This can reduce control switching time, and voltage and current fluctuation in a switching process.

With reference to the first aspect, in some implementations of the first aspect, the determining an output voltage of the converter apparatus in the off-grid control mode based on the output voltage of the converter apparatus at the first moment includes: setting an output reference voltage of the converter apparatus based on a first control voltage, where the first control voltage is a control voltage of the converter apparatus at the first moment, and the control voltage is used to control the output voltage of the converter apparatus; obtaining a feedback parameter, where the feedback parameter includes a voltage and a current of the alternating current output by the converter apparatus; determining the second control voltage based on the output reference voltage of the converter apparatus and the feedback parameter; and determining the output voltage of the converter apparatus in the off-grid control mode based on the second control voltage.

It should be noted that using the first control voltage as the output reference voltage of the converter apparatus means to use an amplitude of the first control voltage as an initial amplitude of the output reference voltage of the converter apparatus, and use a phase of the first control voltage as an initial phase of the output reference voltage of the converter apparatus.

It should be understood that the output reference voltage of the converter apparatus is an output voltage of a reference voltage generator in a voltage controller and is the reference voltage input to the voltage loop.

Based on the foregoing solution, the first control voltage is stored at a moment at which control switching starts, and is used as initial amplitude and phase values of the output reference voltage of the converter apparatus in the off-grid control mode. This ensures that the control voltage for controlling the converter apparatus to convert the direct current into the alternating current does not change abruptly at the moment of the control switching. Therefore, this further ensures that the output voltage of the alternating current port of the converter apparatus does not change abruptly, thereby reducing voltage distortion, current distortion, and regulation time in a control switching process. The initial phase value is given, to avoid a circulating current between converter apparatuses under asynchronous switching in a power supply system including a plurality of converter apparatuses.

In addition, the output reference voltage of the converter apparatus is transited from the first control voltage to a rated voltage obtained during stable operation in the off-grid control mode. This avoids large fluctuation of a control value in a switching transient state, and reduces voltage distortion, current distortion, and regulation time in a switching process.

With reference to the first aspect, in some implementations of the first aspect, the generating the second control voltage based on the output reference voltage of the converter apparatus and the feedback parameter includes: generating an intermediate voltage after the output reference voltage of the converter apparatus and the feedback parameter pass through the current loop and the voltage loop; and adding the output reference voltage of the converter apparatus and the intermediate voltage to generate the second control voltage.

Specifically, the output reference voltage of the converter apparatus and the voltage of the alternating current output by the converter apparatus are used as inputs of the voltage loop, and an output current of the voltage loop and the current of the alternating current output by the converter apparatus are used as inputs of the current loop. The output voltage of the current loop is the intermediate voltage in the foregoing solution, the output reference voltage of the converter apparatus is used as a feedforward amount, and the control voltage is determined by superimposing the feedforward amount and the intermediate voltage.

In the foregoing solution, the output reference voltage of the converter apparatus is superimposed on the output voltage of the current loop as the feedforward amount, to avoid a case in which the control voltage cannot be smoothly transited due to hysteresis effect of a used PI controller after the off-grid control mode is enabled. This ensures that the voltage of the alternating current output by the converter apparatus does not change abruptly at the moment of the control switching process.

With reference to the first aspect, in some implementations of the first aspect, the method further includes: gradually setting the output reference voltage of the converter apparatus to the rated voltage at a specified step. The rated voltage is an output voltage obtained when the converter apparatus operates stably in the off-grid control state.

A voltage change amplitude in the switching process can be controlled by using the specified step, to avoid an abrupt voltage change.

With reference to the first aspect, in some implementations of the first aspect, the second control voltage satisfies:

$$V_{out,Inner} = G_{Inner}(s) \times \left[ G_{out}(S) \cdot \left( V_{out,ref} - V_{out} \right) - I_{out} \right]$$,

where

$$V_{out,m} = V_{out,Inner} + V_{out,ref}$$

$I_{out}$ represents the current of the alternating current output by the converter apparatus, $V_{out}$ represents the voltage of the alternating current output by the converter apparatus, $V_{out,ref}$ represents the output reference voltage of the converter apparatus, $V_{out,Inner}$ represents the intermediate voltage, $G_{out}(s)$ represents a transfer function of the voltage loop in the off-grid control mode, $G_{Inner}(s)$ represents a transfer function of the current loop in the off-grid control mode, and $V_{out,m}$ represents the second control voltage.

In the foregoing solution, the output reference voltage of the converter apparatus is superimposed on the output voltage of the current loop as the feedforward amount, to avoid a case in which the control voltage cannot be smoothly transited due to the hysteresis effect of the used PI controller after a VCM control loop is enabled. This ensures that the output voltage of the alternating current port of the converter apparatus does not change abruptly at the moment of the control switching process.

With reference to the first aspect, in some implementations of the first aspect, the output reference voltage of the converter apparatus satisfies:

$$\begin{cases} E_{out,ref} = E_{out,CCM} + \left( E_{out,VSG} - E_{out,CCM} \right) \cdot f(\Delta t) \\ \theta_{out,ref} = \theta_{out,CCM} + \omega_{out,VSG} \times \Delta t \end{cases} \Delta t \leq t_0,$$

where $\Delta t$ represents duration from the first moment to a current moment, $t_0$ represents duration of a first time period, $E_{out,CCM}$ represents the voltage amplitude of the first control voltage, $\theta_{out,CCM}$ represents the phase of the first control voltage, $E_{out,VSG}$ represents a voltage amplitude of the rated voltage, $\omega_{out,VSG}$ represents an angular frequency of the rated voltage, and $f(\Delta t)$ is a voltage amplitude switching function.

In a possible implementation, the voltage amplitude of the rated voltage and the angular frequency of the rated voltage are obtained through calculation by simulating the virtual synchronous generator control loop.

Based on the foregoing solution, an amplitude of the output reference voltage of the converter apparatus is smoothly transited from the given initial value to an amplitude of the rated voltage obtained during stable operation in a form of a selected transition curve. A phase of the rated voltage is obtained by performing integration on time by using a phase of the output reference voltage of the converter apparatus as the given initial value and the angular frequency of the rated voltage as a proportional coefficient. Further, the foregoing solution ensures that the converter apparatus is smoothly transited from the on-grid control mode to the off-grid control mode after control switching is performed. This avoids the large fluctuation of the control value in the switching transient state, and reduces the voltage distortion, the current distortion, and the regulation time in the switching process.

With reference to the first aspect, in some implementations of the first aspect, the voltage amplitude switching function is:

$$f(\Delta t) = e^{-\tau \cdot \Delta t},$$

where $\tau$ is a constant, and is used to regulate the duration of the first time period.

With reference to the first aspect, in some implementations of the first aspect, the voltage amplitude switching function is:

$$f(\Delta t) = k \cdot \Delta t,$$

where k is a constant, and is used to regulate the duration of the first time period.

With reference to the first aspect, in some implementations of the first aspect, the method further includes: obtaining power grid fault information. The power grid fault information indicates that a power failure occurs in the alternating current power grid and indicates the converter apparatus to switch from the on-grid control mode to the off-grid control mode.

In a possible implementation, the power grid fault information is generated after a detection module in the converter apparatus detects that the power failure occurs in the alternating current power grid.

In a possible implementation, the power grid fault information is sent by a central controller that establishes communication with the converter apparatus. Further, the central controller establishes communication with an on-grid switch. One end of the on-grid switch is connected to the converter apparatus, and the other end is connected to the alternating current power grid. Whether the power failure occurs in the alternating current power grid connected to the converter apparatus is determined based on a status of the on-grid switch. Alternatively, the central controller receives a signal of another converter apparatus connected to the alternating current power grid, and determines, based on the signal, whether the power failure occurs in the alternating current power grid connected to the converter apparatus.

Based on the foregoing solution, in the power supply system including the plurality of converter apparatuses, the detection module and the central controller determine an islanding state, and trigger control switching. This ensures that a single converter apparatus immediately enters a switching state when detecting the islanding state, and effectively avoids an overall on/off-grid switching failure of a cluster caused by a failure of other converter apparatuses to accurately determine the islanding state when the system achieves power balance after some converter apparatuses first switch to an off-grid VCM for operation.

According to a second aspect, a converter apparatus is provided. The converter apparatus has at least two control modes, and the two control modes are an on-grid control mode and an off-grid control mode. The on-grid control mode is controlling the converter apparatus to convert a direct current output by an energy storage system into an alternating current and connect the alternating current to an alternating current power grid, and the off-grid control mode is controlling the converter apparatus to convert the direct current output by the energy storage system into the alternating current and supply power to a local load, where the alternating current output by the converter apparatus is not connected to the alternating current power grid. The converter apparatus includes a controller and a power conversion circuit. A first end of the power conversion circuit is connected to an output end of the controller, a second end of the power conversion circuit is connected to the energy storage system, and a third end of the power conversion circuit is connected to the alternating current power grid. The controller is configured to obtain power grid scheduling information. The power grid scheduling information indicates the converter apparatus to switch from the on-grid control mode to the off-grid control mode. The controller is further configured to obtain an output voltage of the converter apparatus at a first moment. The first moment is a moment at which the converter apparatus switches from the on-grid control mode to the off-grid control mode or a moment at which the power grid scheduling information is received. The controller is further configured to determine an output voltage of the converter apparatus in the off-grid control mode based on the output voltage of the converter apparatus at the first moment. A difference that is between the output voltage of the converter apparatus at the first moment and the output voltage of the converter apparatus in the off-grid control mode and that is within preset time is less than a specified threshold. The power conversion circuit is configured to: convert, based on the output voltage of the converter apparatus in the off-grid control mode, the direct current output by the energy storage system into the alternating current, and supply power to the local load.

With reference to the second aspect, in some implementations of the second aspect, the determining an output voltage of the converter apparatus in the off-grid control mode based on the output voltage of the converter apparatus at the first moment includes: The controller sets an output reference voltage of the converter apparatus based on a first control voltage. The first control voltage is a control voltage of the converter apparatus at the first moment, and the control voltage is used to control the output voltage of the converter apparatus. The controller obtains a feedback parameter. The feedback parameter includes a voltage and a current of the alternating current output by the converter apparatus. The controller determines the second control voltage based on the output reference voltage of the converter apparatus and the feedback parameter. The controller determines the output voltage of the converter apparatus in the off-grid control mode based on the second control voltage.

With reference to the second aspect, in some implementations of the second aspect, the generating the second control voltage based on the output reference voltage of the converter apparatus and the feedback parameter includes: The controller generates an intermediate voltage after inputting the output reference voltage of the converter apparatus and the feedback parameter to a current loop and a voltage loop. The controller adds the output reference voltage of the converter apparatus and the intermediate voltage to generate the second control voltage.

With reference to the second aspect, in some implementations of the second aspect, the controller is further configured to gradually set the output reference voltage of the converter apparatus to a rated voltage at a specified step. The rated voltage is an output voltage obtained when the converter apparatus operates stably in the off-grid control state.

With reference to the second aspect, in some implementations of the second aspect, the second control voltage satisfies:

$$V_{out,Inner} = G_{Inner}(s) \times \left[ G_{out}(S) \cdot \left( V_{out,ref} - V_{out} \right) - I_{out} \right]$$ ,

where

$$V_{out,m} = V_{out,Inner} + V_{out,ref}$$

$I_{out}$ represents the current of the alternating current output by the converter apparatus, $V_{out}$ represents the voltage of the alternating current output by the converter apparatus, $V_{out,ref}$ represents the output reference voltage of the converter apparatus, $V_{out,Inner}$ represents the intermediate voltage, $G_{out}(s)$ represents a transfer function of the voltage loop in the off-grid control mode, $G_{Inner}(s)$ represents a transfer function of the current loop in the off-grid control mode, and $V_{out,m}$ represents the second control voltage.

With reference to the second aspect, in some implementations of the second aspect, the output reference voltage of the converter apparatus satisfies:

$$\begin{cases} E_{out,ref} = E_{out,CCM} + \left( E_{out,VSG} - E_{out,CCM} \right) \cdot f(\Delta t) \\ \theta_{out,ref} = \theta_{out,CCM} + \omega_{out,VSG} \times \Delta t \end{cases} \Delta t \leq t_0,$$

where $\Delta t$ represents duration from the first moment to a current moment, $t_0$ represents duration of a first time period, $E_{out,CCM}$ represents a voltage amplitude of the first control voltage, $\theta_{out,CCM}$ represents a phase of the first control voltage, $E_{out,VSG}$ represents a voltage amplitude of the rated voltage, $\omega_{out,VSG}$ represents an angular frequency of the rated voltage, and $f(\Delta t)$ is a voltage amplitude switching function.

With reference to the second aspect, in some implementations of the second aspect, the voltage amplitude switching function is:

$$f(\Delta t) = e^{-\tau \cdot \Delta t},$$

where $\tau$ is a constant, and is used to regulate the duration of the first time period.

With reference to the second aspect, in some implementations of the second aspect, the voltage amplitude switching function is:

$$f(\Delta t) = k \cdot \Delta t,$$

where k is a constant, and is used to regulate the duration of the first time period.

With reference to the second aspect, in some implementations of the second aspect, the converter apparatus further includes a detection module. The detection module is configured to: detect whether a power failure occurs in the alternating current power grid; and if the detection module detects that the power failure occurs in the alternating current power grid, send power grid fault information to the controller. The power grid fault information indicates that the power failure occurs in the alternating current power grid and indicates the converter apparatus to switch from the on-grid control mode to the off-grid control mode.

With reference to the second aspect, in some implementations of the second aspect, if detecting that the power failure occurs in the alternating current power grid, the detection module sends the power grid fault information to a central controller. The central controller indicates, based on the power grid fault information, another converter apparatus connected to the alternating current power grid to switch a control mode.

For example, the central controller may establish communication with the converter apparatus.

According to a third aspect, a power supply system is provided, including a plurality of converter apparatuses, an energy storage system, an alternating current power grid, an on-grid switch, a central controller, and a point of common coupling. The central controller is configured to indicate the on-grid switch to be opened or closed. Alternating current ends of the plurality of converter apparatuses are connected in parallel to the point of common coupling, and direct current ends are connected to the energy storage system. The plurality of converter apparatuses have at least two control modes, and the two control modes are an on-grid control mode and an off-grid control mode. The on-grid control mode is controlling the converter apparatus to convert a direct current output by the energy storage system into an alternating current and connect the alternating current to the alternating current power grid. The off-grid control mode is controlling the converter apparatus to convert the direct current output by the energy storage system into the alternating current and supply power to a local load, where the alternating current output by the converter apparatus is not connected to the alternating current power grid. The point of common coupling is connected to the alternating current power grid via the on-grid switch. The central controller establishes communication connections to the plurality of converter apparatuses and the on-grid switch.

With reference to the third aspect, in some implementations of the third aspect, the energy storage system includes a multi-battery system and/or a photovoltaic power generation unit.

With reference to the third aspect, in some implementations of the third aspect, if the central controller indicates that the on-grid switch is opened, the central controller is further configured to indicate the plurality of converter apparatuses to switch control modes.

With reference to the third aspect, in some implementations of the third aspect, the converter apparatus is further configured to detect whether a power failure occurs in the alternating current grid.

With reference to the third aspect, in some implementations of the third aspect, the converter apparatus switches the control mode if the power failure occurs in the alternating current grid.

With reference to the third aspect, in some implementations of the third aspect, the converter apparatus is further configured to indicate the central controller to open the on-grid switch if the power failure occurs in the alternating current grid.

According to a fourth aspect, this application provides a processor, including an input circuit, an output circuit, and a processing circuit. The processing circuit is configured to: receive a signal through the input circuit, and transmit a signal through the output circuit, the processor is enabled to perform the method according to any possible implementation of the first aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a fifth aspect, a processing device is provided, including a processor and a memory. The processor is configured to: read instructions stored in the memory, receive a signal through a transceiver, and transmit a signal through a transmitter, to perform the method according to any possible implementation of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory like a read-only memory (read-only memory, ROM). The memory and the processor may be integrated into a same chip, or may be separately disposed on different chips. A type of the memory and a manner of disposing the memory and the processor are not limited in embodiments of this application.

It should be understood that, a related data exchange process like sending of indication information may be a process of outputting the indication information from the processor, and receiving of capability information may be a process of receiving input capability information by the processor. Specifically, data output by the processor may be output to the transmitter, and input data received by the processor may be from the transceiver. The transmitter and the transceiver may be collectively referred to as a transceiver.

The processing device according to the fifth aspect may be one or more chips. The processor in the processing device may be implemented by using hardware, or may be implemented by using software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a sixth aspect, a chip is provided. The chip obtains instructions and executes the instructions to implement the method according to any one of the first aspect or the implementations of the first aspect.

Optionally, in an implementation, the chip includes a processor and a data interface. The processor reads, through the data interface, instructions stored in a memory, to implement the method according to any one of the first aspect or the implementations of the first aspect.

Optionally, in an implementation, the chip may further include the memory. The memory stores the instructions, the processor is configured to execute the instructions stored in the memory. When the instructions are executed, the processor is configured to perform the method according to any one of the first aspect or the implementations of the first aspect.

According to a seventh aspect, a computer program product is provided. The computer program product includes computer program code. When the computer program code is run on a computer, the computer is enabled to implement the method according to any one of the first aspect or the implementations of the first aspect.

According to an eighth aspect, a computer-readable storage medium is provided, including instructions. The instructions are used to implement the method according to any one of the first aspect or the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

According to a ninth aspect, a computing device is provided. The computing device includes a processor and a memory, and the processor of the computing device is configured to execute instructions stored in the memory, to enable the computing device to perform the method according to any possible implementation of the first aspect.

According to a tenth aspect, a computing node cluster is provided. The computing node cluster includes at least one computing node, each computing node includes a processor and a memory, and the processor of the at least one computing node is configured to execute instructions stored in the memory of the at least one computing node, to enable the computing node cluster to perform the method according to any possible implementation of the first aspect.

**BRIEF DESCRIPTION OF DRAWINGS**

FIG. 1 is a diagram of an application scenario according to an embodiment of this application;
FIG. 2 is a flowchart of a control switching method 200 according to an embodiment of this application;
FIG. 3 is a schematic block diagram of a controller algorithm 300 according to an embodiment of this application;
FIG. 4 is a flowchart of a controller algorithm 400 according to an embodiment of this application;
FIG. 5 is a diagram of a converter apparatus 500 according to an embodiment of this application;
FIG. 6 is a diagram of a power supply system 600 according to an embodiment of this application;
FIG. 7 is a flowchart of a control algorithm 700 of a central controller according to an embodiment of this application;
FIG. 8 is a diagram of a controller 10 according to an embodiment of this application; and
FIG. 9 is a diagram of a central controller 20 according to an embodiment of this application.

**DESCRIPTION OF EMBODIMENTS**

The following describes technical solutions of this application with reference to accompanying drawings.

For ease of understanding, some terms in embodiments of this application are first described.

A power conversion system (power conversion system, PCS) is a converter that implements bidirectional conversion of electric energy in an electrochemical energy storage system, is connected between a battery system, and a power grid and/or a load, and can directly supply power to an alternating current load when there is no power grid. The PCS includes a converter and a control unit. The PCS may control charging and discharging processes of the battery system. Specifically, the control unit of the PCS receives a background control command through communication, and controls, based on a symbol and a value of a power command, the converter to charge or discharge the battery system, to regulate an active power and a reactive power of the power grid. The control unit of the PCS communicates with a battery management system (battery management system, BMS) through a CAN interface to obtain status information of a battery string, to implement protective charging and discharging of a battery, thereby ensuring safe operation of the battery.

A microgrid is a small-scale power grid that can basically balance internal power and energy, and includes a distributed power generation device, a power load, monitoring/protection and automation apparatuses, and an energy storage device when necessary. The microgrid may be connected to an external power grid for operation, or may operate independently off-grid.

An electrochemical energy storage station is a station that uses an electrochemical battery as an energy storage component to store, convert, and release electric energy, and includes several electrochemical energy storage systems of a same type or of different types.

An on-grid operation mode is an operation mode in which the power conversion system is connected to an alternating current grid synchronously, operates with a characteristic of a current source, and feeds back electric energy of the power grid is stored in the battery string or energy of the battery string to the power grid.

An off-grid operation mode is an operation mode in which the power conversion system operates with a characteristic of a voltage source to supply power to an alternating current side of the power conversion system or a connected power grid.

A current control mode (current control mode, CCM) monitors a voltage and a current at the same time, and regulates a PWM duty cycle, to ensure that an output voltage is stable, an output current is within a normal range, and overcurrent does not occur. A principle of the current control mode is as follows: A voltage on a sampling resistor is used as an input of a current comparator for comparison with an output of a voltage error amplifier, and a value of PWM is controlled based on a comparison result, to implement voltage stability and a proper current range.

A voltage control mode (VCM) is as follows: A value of an output voltage is monitored, and the PWM duty cycle is regulated to ensure output voltage stability. A principle of the voltage control mode is as follows: A voltage collected at a load end is used as an input of an error amplifier, and another input of the error amplifier is a reference voltage. After the two voltages are compared, the two voltages are used as inputs of a PWM controller and are processed with a fixed sawtooth wave signal, to generate a PWM signal to control a switching transistor to be conducted and cut off, thereby regulating the voltage.

A virtual synchronous generator (virtual synchronous generator, VSG) is an operation technology that embeds a mathematical model of a synchronous generator into a control algorithm of an inverter and simulates a static power electronic apparatus as a rotating electrical machine. The static power electronic apparatus is enabled to have functions such as damping effect on rapid voltage and frequency fluctuation, automatic power distribution, and synchronous power grid operation by simulating primary frequency and voltage regulation of the synchronous generator. By embedding a synchronous generator equation into a converter control system, the VSG can exchange power between a direct current power supply and a system based on a characteristic of the synchronous generator. From a perspective of the system, the VSG is equivalent to the synchronous generator if high-frequency components generated by on-off actions of a power electronic device are ignored.

It should be understood that the voltage and the current in this application are vector descriptions, including amplitudes and phases of the voltage and the current, and further including an angular frequency. A voltage value refers to a voltage amplitude, is a scalar, and is different from the voltage. A current value is similar.

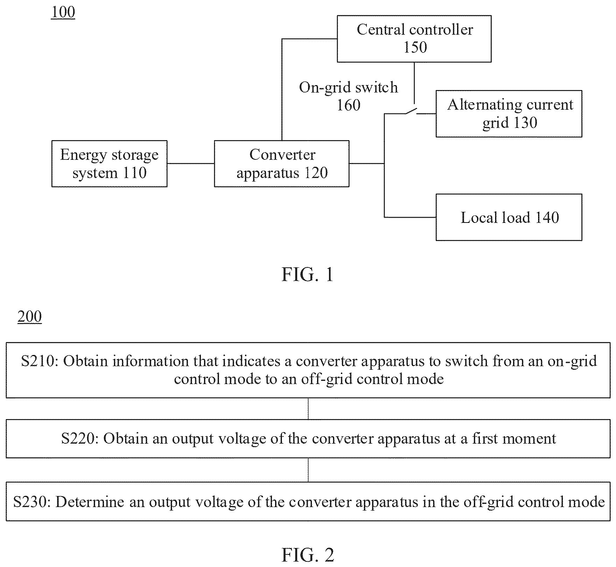

FIG. 1 is a diagram of an application scenario according to an embodiment of this application. As shown in FIG. 1, the application scenario includes an energy storage system 110, a converter apparatus 120, an alternating current power grid 130, a local load 140, a central controller 150, and an on-grid switch 160. A direct current end of the converter apparatus is connected to the energy storage system, an alternating current end of the converter apparatus is connected to the alternating current power grid via the on-grid switch, and the alternating current end of the converter apparatus is further connected to the local load.

In some examples, the energy storage system (energy storage system, ESS) may include a multi-battery system, or may include coupling between the multi-battery system and a photovoltaic power generation unit.

In this embodiment of this application, the central controller may communicate with the converter apparatus, or may communicate with the on-grid switch. For example, if the foregoing application scenario is a microgrid scenario, the central controller is a microgrid central controller. Alternatively, if the foregoing application scenario is an energy storage station scenario, the central controller is an energy storage station controller.

It should be understood that the converter apparatus in this application may be used in a new energy microgrid or an electrochemical energy storage station, or may be used in another field.

In this embodiment of this application, when the on-grid switch is closed, the ESS is connected to the alternating current power grid for operation, and the converter apparatus is in an on-grid operation mode. To improve active power and reactive power command following performance of the system for better involvement in regulation of the power grid, the converter apparatus needs to operate in a current control mode. When the on-grid switch is opened, the ESS is disconnected from the alternating current power grid and supplies power only to the local load, and the converter apparatus is in an off-grid operation mode. To improve voltage and frequency stability, and a transient support capability and improve reliability of power supply of the local load, the converter apparatus needs to operate in a voltage control mode.

The application scenario in this embodiment of this application may include a plurality of energy storage systems, and correspondingly, include a plurality of converter apparatuses. Alternating current sides of the plurality of converter apparatuses are connected in parallel at a point of common coupling (point of common coupling, PCC) to form a converter apparatus cluster. Further, the alternating current sides of the plurality of converter apparatuses are connected in parallel at the PCC after passing through a filter, to form the converter apparatus cluster. A direct current side of each converter apparatus is connected to an ESS, the PCC is connected to the local load, the PCC is further connected to the alternating current power grid via the on-grid switch, and the central controller also establishes a communication connection to the on-grid switch and each converter apparatus.

FIG. 2 is a flowchart of a control switching method 200 according to an embodiment of this application. The method 200 may be applied to a converter apparatus, the converter apparatus may be disposed in a power supply system, and the converter apparatus has at least two control modes. In an on-grid control mode, the converter apparatus can convert, based on a control voltage, a direct current output by an energy storage system into an alternating current and connect the alternating current to an alternating current power grid. In an off-grid control mode, the converter apparatus can convert, based on the control voltage, the direct current output by the energy storage system into the alternating current and supply power to a local load. In addition, in the off-grid control mode, the alternating current output by the converter apparatus is not connected to the alternating current power grid.

In a possible implementation, further, when the converter apparatus connects the energy storage system to the alternating current power grid, the converter apparatus is in the on-grid operation mode. To improve active power and reactive power command following performance of the energy storage system for better involvement in regulation of the alternating current power grid, the converter apparatus needs to operate in a current control mode based on the control voltage output by a controller. In other words, the on-grid control mode in the foregoing solution is the current control mode. Specifically, the controller in the current control mode includes a PQ control loop and a current loop. The PQ control loop implements closed-loop following control by executing an active power command and a reactive power command that are output by the converter apparatus. An output current of the PQ control loop is a reference current input by the current loop, the current loop performs closed-loop control on an output current of the current apparatus, and the control voltage output by the controller is superimposing an output voltage of the current loop and an output voltage of an alternating current port of the converter apparatus.

When the system is disconnected from a utility grid and supplies power only to the local load, the converter apparatus is in an off-grid operation mode. To improve voltage and frequency stability, and a transient support capability of an islanding system and improve reliability of power supply of the local load, the converter apparatus needs to operate in a voltage control mode based on the control voltage output by the controller. In other words, the off-grid control mode is the voltage control mode. Specifically, in the voltage control mode, the controller includes a virtual synchronous generator control loop, a voltage reference generator, a voltage loop, and the current loop. The virtual synchronous generator control loop performs virtual synchronous generator control, and the voltage reference generator calculates a reference voltage input to the voltage loop based on a voltage amplitude and a frequency that are output by the virtual synchronous generator control loop, and a latch value of a latch. The voltage loop and the current loop separately perform closed-loop control on the output voltage and the output current of the converter apparatus, and an output current of the current loop is a reference current input to the voltage loop.

It should be understood that, in this embodiment of this application, the converter apparatus outputs the voltage based on the control voltage output by the controller in the converter apparatus. Therefore, obtaining the output voltage of the converter apparatus may include obtaining the control voltage corresponding to the output voltage. Correspondingly, determining the control voltage may be determining the output voltage, of the converter apparatus, corresponding to the control voltage.

It should be understood that, in this embodiment of this application, when the energy storage system is connected to the alternating current power grid via the converter apparatus, the energy storage system may supply power to the local load together with the alternating current power grid, and the energy storage system may also store electric energy of the alternating current power grid. When the energy storage system is connected to the alternating current power grid via the converter apparatus, the current apparatus operates in the on-grid control mode.

The converter apparatus includes the controller and a power conversion circuit. The controller is configured to control the converter apparatus in different modes when outputting the control voltage. The method 200 is performed by the controller in the converter apparatus or the entire converter apparatus.

In some examples, a direct current power supply in the power supply system may be a grid-connected photovoltaic power generation system, the alternating current power grid in the power supply system may be a mains grid, and the converter apparatus may be a PCS.

As shown in FIG. 2, the method includes the following steps.

S210: Obtain first indication information, where the first indication information indicates the converter apparatus to switch from the on-grid control mode to the off-grid control mode.

In some examples, the converter apparatus may be the PCS or a converter circuit in the PCS.

In a possible implementation, the first indication information includes power grid scheduling information.

In a possible implementation, the first indication information includes power grid fault information, and the power grid fault information comes from a detection module. Specifically, the detection module sends the power grid fault information after determining that a power failure occurs in the alternating current power grid connected to the converter apparatus. The detection module may be a detection module in the converter apparatus, or may be an external detection module. This is not limited in this application.

For example, the detection module is an islanding detection module. When detecting an islanding state, the detection module may determine that the power failure occurs in the alternating current power grid connected to the converter apparatus, to send the power grid fault information.

For ease of understanding, the following describes the islanding state and islanding detection.

The islanding state is a self-supply islanding phenomenon that cannot be controlled by an electric power company and in which when the mains grid stops operating due to a fault accident, power outage maintenance, or the like, the grid-connected photovoltaic power generation system installed at a user's network cannot detect a power outage state in time and cannot quickly disconnect the grid-connected photovoltaic power generation system from the mains grid, and the grid-connected photovoltaic power generation system supplies power to a surrounding load.

Islanding detection methods may be classified into three types: a passive detection method, an active detection method, and a switch status monitoring method.

In the passive method, islanding detection is performed based on a change of a voltage, a frequency, a phase, or a harmonic at an output end of an inverter when the power failure occurs in the alternating current power grid.

The active islanding detection method is controlling the inverter to make an output power, frequency, or phase at the output end of the inverter disturb. When the alternating current power grid operates normally, the disturbance cannot be detected due to balance of the power grid. When the alternating current power grid is faulty, the disturbance output by the inverter quickly accumulates and exceeds an allowed range, triggering an islanding detection circuit.

The switch status monitoring method mainly uses communication to monitor a status of an on-grid switch to determine the islanding state.

In a possible implementation, the power grid fault information comes from a central controller. Specifically, the central controller sends the power grid fault information after determining that the power failure occurs in the alternating current power grid connected to the converter apparatus.

For example, the central controller receives information from the on-grid switch. If the on-grid switch indicates that the on-grid switch is opened, the central controller determines that the power failure occurs in the alternating current power grid, and sends the power grid fault information.

For example, the central controller receives a signal from the converter apparatus, determines the signal from the converter apparatus, and if determining that the power failure occurs in the alternating current power grid, sends the power grid fault information to a converter apparatus that establishes communication with the central controller. Specifically, the central controller establishes communication with a plurality of PCSs, and all PCSs upload respective Switch_PCS signals to the central controller. If detecting that Switch_PCS=1 exists, the central controller determines that the power failure occurs in the alternating current power grid, and the central controller sends the power grid fault information to another PCS that establishes communication with the central controller. In this way, it is ensured that when the power failure occurs in the alternating current power grid, all the PCSs that establish communication with the central controller obtain the power grid fault information.

S220: Obtain an output voltage of the converter apparatus at a first moment, where the first moment is a moment at which the converter apparatus switches from the on-grid control mode to the off-grid control mode or a moment at which power grid scheduling information is received.

It should be noted that the obtaining an output voltage of the converter apparatus at a first moment includes obtaining a first control voltage. The first control voltage is used to control the converter apparatus to output the voltage at the first moment.

Specifically, the obtained first control voltage includes a stored amplitude and phase of the first control voltage.

S230: Determine, based on the output voltage of the converter apparatus at the first moment, an output voltage of the converter apparatus in the off-grid control mode, where a difference that is between the output voltage of the converter apparatus at the first moment and the output voltage of the converter apparatus in the off-grid control mode and that is within preset time is less than a specified threshold.

The determining, based on the output voltage of the converter apparatus at the first moment, an output voltage of the converter apparatus in the off-grid control mode refers to determining, based on the first control voltage of the converter apparatus at the first moment, a control voltage of the converter apparatus in the off-grid control mode. Then, the output voltage of the converter apparatus in the off-grid control mode is determined based on the control voltage of the converter apparatus in the off-grid control mode.

Further, in the off-grid control mode, the control voltage is generated by the converter apparatus based on an output reference voltage of the converter apparatus, and the output reference voltage of the converter apparatus meets a rated voltage when the converter apparatus runs stably.

Specifically, the output reference voltage of the converter apparatus is set based on the first control voltage. Further, the first control voltage is used as an initial voltage of the output reference voltage of the converter apparatus. In some examples, the output reference voltage of the converter apparatus is an output voltage of a voltage reference generator in the voltage control mode, and is used to generate, in the voltage control mode, a control voltage for controlling the converter apparatus to convert the direct current into the alternating current. An initial voltage amplitude of the output reference voltage of the converter apparatus is a voltage amplitude of the first control voltage, and an initial phase of the output reference voltage of the converter apparatus is the phase of the first control voltage. Further, in S220, a frequency of the first control voltage may be further stored. An initial frequency of the output reference voltage of the converter apparatus is the frequency of the first control voltage.

In the foregoing process, the first control voltage is stored at a moment at which control switching is performed, and is used as initial amplitude and phase values of the output reference voltage of the converter apparatus in the off-grid control mode. This ensures that the voltage for controlling the converter apparatus to convert the direct current into the alternating current does not change abruptly at the moment of the control switching. Therefore, this further ensures that the output voltage of the alternating current port of the converter apparatus does not change abruptly, thereby reducing voltage distortion, current distortion, and regulation time in a control switching process. The initial phase value is given, to avoid a circulating current between converter apparatuses under asynchronous switching in a power supply system including a plurality of converter apparatuses.

Further, the output reference voltage of the converter apparatus is transited from the initial voltage to the rated voltage in a first time period.

The first time period may be a time period in which the control switching process is completed, a start moment of the first time period is the first moment, and the first moment is a moment at which the converter apparatus is enabled, and switches from the on-grid control mode to the off-grid control mode, or a moment at which the first indication information is received. The first time period may alternatively be a time period in which an on/off-grid switching process of the entire power supply system is completed, and the start moment of the first time period is a moment at which the on-grid switch is opened. It should be understood that duration of the first time period may be set based on an actual application situation. A specific manner of setting the duration of the first time period is not limited in this application.

The rated voltage is the output reference voltage of the converter apparatus after the converter apparatus completes control switching and stably operates in the voltage control mode.

For example, a specific value of the rated voltage may be determined through calculation by simulating a VSG control loop by using an algorithm, and the rated voltage includes an amplitude and an angular frequency of the rated voltage.

In a possible implementation, the output reference voltage of the converter apparatus is gradually set to the rated voltage at a specified step.

Specifically, in some examples, when the output reference voltage of the converter apparatus is transited from the first control voltage to the rated voltage in the first time period, the output reference voltage of the converter apparatus satisfies:

$$\begin{cases} E_{out,ref} = E_{out,CCM} + \left( E_{out,VSG} - E_{out,CCM} \right) \cdot f(\Delta t) \\ \theta_{out,ref} = \theta_{out,CCM} + \omega_{out,VSG} \times \Delta t \end{cases} \Delta t \leq t_0,$$

where $\Delta t$ represents duration from the first moment to a current moment, $t_0$ represents the duration of the first time period, $E_{out,CCM}$ represents the voltage amplitude of the first control voltage, $\theta_{out,CCM}$ represents the phase of the first control voltage, $E_{out,VSG}$ represents a voltage amplitude of the rated voltage, $\omega_{out,VSG}$ represents the angular frequency of the rated voltage, and $f(\Delta t)$ is a voltage amplitude switching function.

In a possible implementation, an exponential transition curve is used for the voltage amplitude, and the voltage amplitude switching function is:

$$f(\Delta t) = 1 - e^{-\tau \cdot \Delta t},$$

where $\tau$ is a constant, and is used to regulate the duration of the first time period. Specifically, if the duration of the first time period needs to be increased, a value of $\tau$ may be decreased. If the duration of the first time period needs to be decreased, the value of $\tau$ may be increased.

In a possible implementation, a linear transition curve is used for the voltage amplitude, and the voltage amplitude switching function is:

$$f(\Delta t) = k \cdot \Delta t,$$

where k is a constant, and is used to regulate the duration of the first time period. Specifically, if the duration of the first time period needs to be increased, a value of k may be decreased. If the duration of the first time period needs to be decreased, the value of k may be increased.

In the foregoing process, the amplitude of the output reference voltage of the converter apparatus is smoothly transited from the given initial value to the amplitude of the rated voltage output by the VSG control loop in a form of a selected transition curve. A phase of the rated voltage is obtained by performing integration on time by using the phase of the output reference voltage of the converter apparatus as the given initial value and the angular frequency output by the VSG control loop as a proportional coefficient. The solution ensures that the converter apparatus is smoothly transited from a CCM to a VCM mode based on VSG control after control switching is performed. This avoids large fluctuation of a control value in a switching transient state, and reduces the voltage distortion, the current distortion, and the regulation time in the switching process.

A feedback parameter is obtained after determining the output reference voltage of the converter apparatus, and a second control voltage is generated based on the output reference voltage of the converter apparatus and the feedback parameter. The second control voltage is used to control, in the voltage control mode, the converter apparatus to convert the direct current into the alternating current. The output voltage of the converter apparatus in the off-grid control mode is determined based on the second control voltage. The feedback parameter includes the output voltage and an output current of the alternating current port of the converter apparatus, that is, a voltage and a current that are of the converter apparatus and that are connected to the alternating current power grid.

Specifically, an intermediate voltage is generated based on the output reference voltage of the converter apparatus and the feedback parameter, and the output reference voltage of the converter apparatus and the intermediate voltage are added to determine the second control voltage.

In a possible implementation, the second control voltage satisfies:

$$V_{out,Inner} = G_{Inner}(s) \times \left[ G_{out}(S) \cdot (V_{out,ref} - V_{out}) - I_{out} \right] \quad ,$$

where

$$V_{out,m} = V_{out,Inner} + V_{out,ref}$$

$I_{out}$ represents the current of the alternating current output by the converter apparatus, $V_{out}$ represents the voltage of the alternating current output by the converter apparatus, $V_{out,ref}$ represents the output reference voltage of the converter apparatus, $V_{out,Inner}$ represents the intermediate voltage, $G_{out}(s)$ represents a transfer function of the voltage loop in the voltage control mode, $G_{Inner}(s)$ represents a transfer function of the current loop in the voltage control mode, and $V_{out,m}$ represents the second control voltage.

It can be learned, from the formula that the second control voltage satisfies, that the output reference voltage of the converter apparatus is superimposed on the output voltage of the current loop as a feedforward amount, to avoid a case in which the control voltage cannot be smoothly transited due to hysteresis effect of a used PI controller after a second control loop is enabled. This ensures that the output voltage of the alternating current port of the converter apparatus does not change abruptly at a moment of the control switching process.

In the foregoing solution, the first control voltage is stored at the moment at which control switching is performed, the output reference voltage of the converter apparatus in the off-grid control mode is transited from the first control voltage to the rated voltage, and the control voltage is generated by using the output reference voltage of the converter apparatus as the feedforward amount. This ensures that the voltage for controlling the converter apparatus to convert the direct current into the alternating current does not change abruptly at the moment of the control switching. Therefore, this further ensures that the output voltage of the alternating current port of the converter apparatus does not change abruptly, thereby reducing the voltage distortion, the current distortion, and the regulation time in the control switching process. In addition, the initial phase value is given, to avoid a circulating current between converter apparatuses under asynchronous switching in a power supply system including a plurality of converter apparatuses.

In addition, in the power supply system including the plurality of converter apparatuses, the detection module and the central controller determine the islanding state, and trigger control switching. This ensures that a single converter apparatus immediately enters a switching state when detecting the islanding state, and effectively avoids an overall on/off-grid switching failure of a cluster caused by a failure of other converter apparatuses to accurately determine the islanding state when the system achieves power balance after some converter apparatuses first switch to an off-grid VCM for operation.

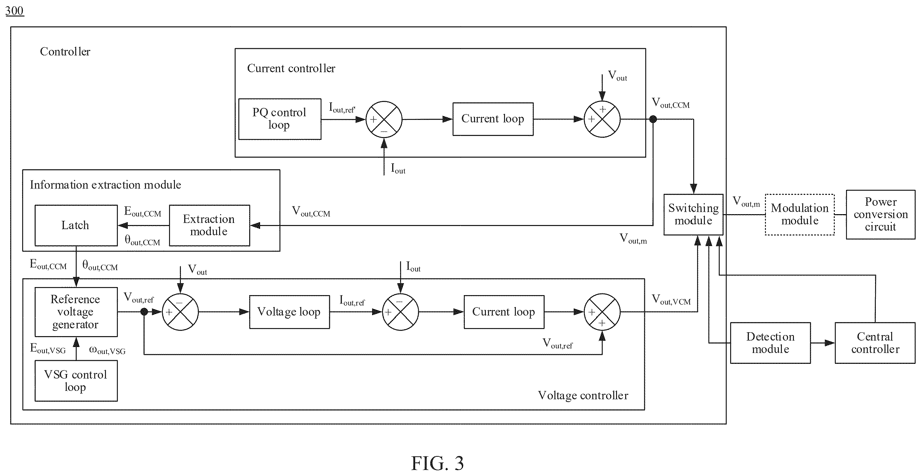

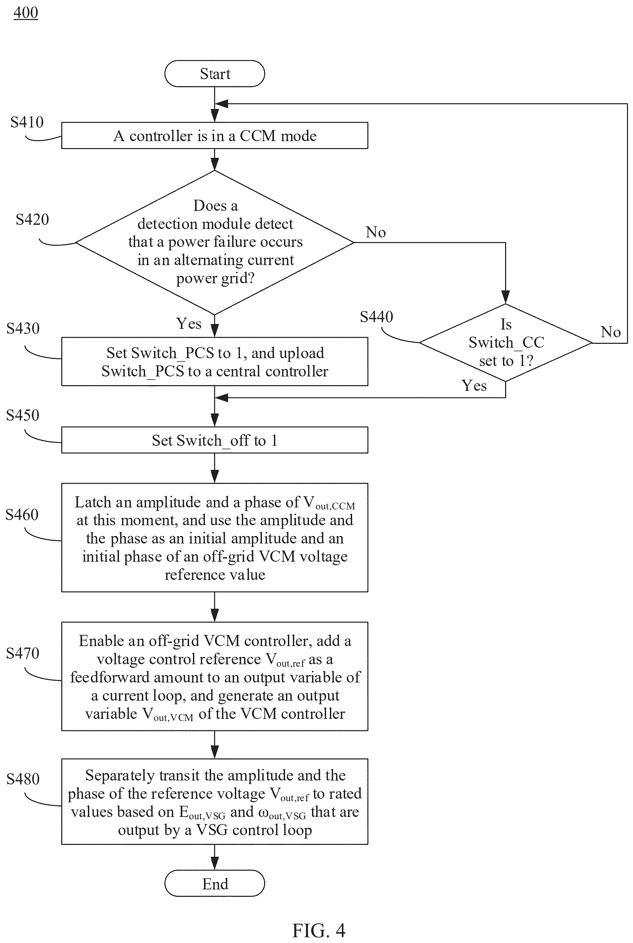

It should be understood that the transfer function of the voltage loop and the transfer function of the current loop in the foregoing formula may be obtained by simulating the voltage loop and the current loop by using algorithms. The following specifically describes an algorithm implementation of the method 200 with reference to FIG. 3 and FIG. 4.

FIG. 3 is a schematic block diagram of a controller algorithm 300 according to an embodiment of this application. The controller algorithm 300 is a controller algorithm for implementing the foregoing method 200. For ease of understanding, a current control mode represents the on-grid control mode in the method 200, and a voltage control mode represents the off-grid control mode in the method 200. As shown in FIG. 3, a current controller, a voltage controller, a switching module, and an information extraction module are simulated in the controller algorithm 300. The current controller is configured to control a converter apparatus or a power conversion circuit in the converter apparatus in a CCM mode, and the voltage controller is configured to control, in a VCM mode, the converter apparatus or the power conversion circuit in the converter apparatus.

When a power supply system in which the converter apparatus is located is in an on-grid state, the switching module selects the current controller, the current controller is enabled, the voltage controller is frozen, and the converter apparatus is controlled in the CCM mode. The controller algorithm 300 simulates a PQ control loop and a current loop in the current control mode. Specifically, a reference current $I_{out,ref}$ is calculated by simulating the PQ control loop. An output current value $I_{out}$ of an alternating current port of the converter apparatus is subtracted from the reference current, and a difference is used as an input current of the current loop. An output voltage of the current loop and an output voltage value $V_{out}$ of the alternating current port of the converter apparatus are added, and a sum of the output voltage of the current loop and the output voltage value $V_{out}$ of the alternating current port of the converter apparatus is a control voltage $V_{out,CCM}$ in the CCM mode. Therefore, in the CCM mode, a control voltage $V_{out,m}$ satisfies:

$$V_{out,m} = V_{out,CCM} = G_{cur}(s) \times \left(I_{out,ref'} - I_{out}\right) + V_{out},$$

where $G_{cur}(s)$ represents a transfer function of the current loop.

PQ control, also referred to as active/reactive power control, is constant power control; and is controlling an output power to a given value by controlling a current, and is current control. The PQ control is applied to a grid-connected distributed power generation or microgrid system. In this system, an alternating current power grid provides voltage support, and the distributed power generation system is processed as a constant power output. The PQ control can ensure balance between power generation and power consumption on the alternating current power grid by controlling an active power and a reactive power.

When the power supply system in which the converter apparatus is located is in an off-grid state, the switching module selects the voltage controller, the voltage controller is enabled, the current controller is frozen, and the converter apparatus is controlled in the VCM mode. The controller algorithm 300 simulates, in the voltage control mode, a VSG control loop, a reference voltage generator, a voltage loop, and the current loop.

Specifically, the reference voltage generator is configured to: generate a reference voltage $V_{out,ref}$, subtract the output voltage value $V_{out}$ of the alternating current port of the converter apparatus from the reference voltage, use a difference as an input of the voltage loop, subtract the output current value $I_{out}$ of the alternating current port of the converter apparatus from an output current $I_{out,ref}$ of the voltage loop, use a difference as the input of the current loop, use the reference voltage $V_{out,ref}$ as a feedforward amount, and superimpose the reference voltage $V_{out,ref}$ with the output of the current loop to be used as a control voltage $V_{out,VCM}$ in the VCM mode. The output voltage of the current loop is the intermediate voltage in the method 200. Therefore, in the VCM mode, the control voltage $V_{out,m}$ satisfies:

$$V_{out,m} = G_{Inner}(s) \times \left[G_{out}(S) \cdot \left(V_{out,ref} - V_{out}\right) - I_{out}\right] + V_{out,ref},$$

where $G_{out}(s)$ represents a transfer function of the voltage loop in the voltage control mode, and $G_{Inner}(s)$ represents a transfer function of the current loop in the voltage control mode.

At a moment at which the switching module selects the voltage controller, the information extraction module collects and stores $V_{out,CCM}$ at the moment, extracts an amplitude $E_{out,CCM}$ and a phase $\theta_{out,CCM}$ that are of $V_{out,CCM}$, and sends the amplitude $E_{out,CCM}$ and the phase $\theta_{out,CCM}$ to the reference voltage generator. The reference voltage generator uses $E_{out,CCM}$ and $\theta_{out,CCM}$ as initial values of the reference voltage $V_{out,ref}$. The VSG control loop calculates a rated voltage $V_{out,VSG}$ of the reference voltage during stable operation in the VCM mode, and sends, to the reference voltage generator, an amplitude $E_{out,VSG}$ and an angular frequency $\omega_{out,VSG}$ that correspond to the rated voltage $V_{out,CCM}$. The voltage reference generator transits the reference voltage from $V_{out,CCM}$ to $V_{out,VSG}$ within a time period after the switching module selects the voltage controller. The time period is referred to as a first time period. Duration of the first time period may be set based on an actual requirement. In the first time period, the reference voltage $V_{out,ref}$ satisfies:

$$\begin{cases} E_{out,ref} = E_{out,CCM} + \left(E_{out,VSG} - E_{out,CCM}\right) \cdot f(\Delta t) \\ \theta_{out,ref} = \theta_{out,CCM} + \omega_{out,VSG} \times \Delta t \end{cases} \Delta t \le t_0,$$

where $\Delta t$ represents duration from a start moment of the first time period to a current moment, $t_0$ represents the duration of the first time period, $E_{out,ref}$ represents a voltage amplitude of the reference voltage, $\theta_{out,ref}$ represents a phase of the reference voltage, and $f(\Delta t)$ is a voltage amplitude switching function.

In the voltage amplitude switching function, the output reference voltage of the converter apparatus is gradually set to the rated voltage at a specified step.

In a possible implementation, an exponential transition curve is used for the voltage amplitude, and the voltage amplitude switching function is:

$$f(\Delta t) = 1 - e^{-\tau \cdot \Delta t},$$

where $\tau$ is a constant, and is used to regulate the duration of the first time period. Specifically, if the duration of the first time period needs to be increased, a value of $\tau$ may be decreased. If the duration of the first time period needs to be decreased, the value of $\tau$ may be increased.

In a possible implementation, a linear transition curve is used for the voltage amplitude, and the voltage amplitude switching function is:

$$f(\Delta t) = k \cdot \Delta t,$$

where k is a constant, and is used to regulate the duration of the first time period. Specifically, if the duration of the first time period needs to be increased, a value of k may be decreased. If the duration of the first time period needs to be decreased, the value of k may be increased.

When the reference voltage is transited to $V_{out,VSG}$, a control switching process is completed, and the converter apparatus operates stably in the VCM mode. After the control switching process is completed, the amplitude of the reference voltage is equal to an amplitude of a voltage output by the VSG control loop, and an angular frequency of the reference voltage is equal to an angular frequency output by the VSG control loop.

It should be understood that, in correspondence with the method 200, the reference voltage in the algorithm 300 is the output reference voltage of the converter apparatus in the method 200, $V_{out,CCM}$ at the moment at which the switching module selects the voltage controller in the algorithm 300 corresponds to the first control voltage in the method 200, and the control voltage $V_{out,m}$ in the VCM mode in the algorithm 300 corresponds to the second control voltage in the method 200.

In this embodiment of this application, the switching module may establish communication with both the detection module and a central controller. Specifically, if the switching module receives a switching indication signal from the detection module and/or the central controller, the switching module switches from selecting the current controller to selecting the controller.

In a possible implementation, if detecting that a power failure occurs in the alternating current power grid, the detection module sends the switching indication signal to the switching module. Further, the detection module sends fault indication information to the central controller.

In a possible implementation, if receiving an off-grid indication signal from an on-grid switch and/or receiving the fault indication information from the detection module, the central controller sends switching indication information to the switching module. If a power supply system in which the central controller is located includes a plurality of converter apparatuses connected to a same alternating current power grid, and if the central controller receives the off-grid indication signal from the on-grid switch and/or receives fault indication information from a detection module corresponding to any converter apparatus, the central controller sends the switching indication information to switching modules of all the converter apparatuses. It should be understood that the converter apparatus may be directly or indirectly connected to the alternating current power grid. In other words, that the converter apparatus is connected to the alternating current power grid means that a fault of the alternating current power grid affects the converter apparatus.

In this application, the switching module may select $V_{out,CCM}$ or $V_{out,VCM}$ as $V_{out,m}$, and input $V_{out,m}$ to a modulation module. After $V_{out,m}$ is modulated by the modulation module, $V_{out,m}$ is sent to a converter, to control the converter to convert a direct current into an alternating current that can be connected to the alternating current power grid. $V_{out,m}$ may alternatively be referred to as a modulated wave of the converter apparatus.

In some examples, the converter apparatus may be a PCS, and a corresponding direct current comes from an energy storage system connected to the PCS.

It should be understood that the algorithm 300 is the algorithm implementation of the method 200. Actually, a person of ordinary skill in the art may be aware that each module in the algorithm 300 may also be implemented by using electronic hardware.

In the foregoing solution, an output voltage of the current controller is stored as the initial value of the reference voltage in the voltage controller at a moment of the control switching, the reference voltage is transited to the rated voltage, and an output voltage of the voltage controller is generated by using the reference voltage as the feedforward amount. This ensures that the voltage for controlling the converter apparatus to convert the direct current into the alternating current does not change abruptly at the moment of the control switching. Therefore, this further ensures that the output voltage of the alternating current port of the converter apparatus does not change abruptly, thereby reducing voltage distortion, current distortion, and regulation time in the control switching process. In addition, the initial phase value is given, to avoid a circulating current between converter apparatuses under asynchronous switching in the power supply system including the plurality of converter apparatuses.

In addition, in the power supply system including the plurality of converter apparatuses, the detection module and the central controller determine an islanding state, and trigger control switching. This ensures that a single converter apparatus immediately enters a switching state when detecting the islanding state, and effectively avoids an overall on/off-grid switching failure of a cluster caused by a failure of other converter apparatuses to accurately determine the islanding state when the system achieves power balance after some converter apparatuses first switch to an off-grid VCM for operation.

FIG. 4 is a flowchart of a controller algorithm 400 according to an embodiment of this application. The controller algorithm 400 is a controller algorithm for implementing the foregoing method 200. As shown in FIG. 4, for ease of description, a PCS is used as an example of a converter apparatus in this embodiment of this application.

S410: A CCM controller is in an enabled state, a VCM controller is in a frozen state, and a PCS modulated wave $V_{out,m}$ is an output variable $V_{out,CCM}$ of the CCM controller. This step is a control mode before the PCS is switched to an off-grid state. For a method for calculating the modulated wave $V_{out,m}$ used to generate a PWM pulse, refer to the method for calculating the control voltage $V_{out,m}$ in the CCM mode in the algorithm 300. Details are not described herein again. This step implements a power scheduling command response function of the PCS in an on-grid mode.

S420: A detection module detects whether a power failure occurs in an alternating current power grid. This step is used to determine whether a power supply system enters an islanding state. For a method for detecting the islanding state, refer to step S210. A specific algorithm implementation thereof is not limited in this application. If the power supply system enters the islanding state, step S430 is performed. If the power supply system does not enter the islanding state, step S440 is performed.

S430: Set Switch_PCS to 1, and upload Switch_PCS to a central controller, where Switch_PCS is a PCS islanding detection flag signal, Switch_PCS is set to 1 in the off-grid state, and Switch_PCS is set to 0 in the on-grid state. When a plurality of PCSs exist in the system, if detecting that the power failure occurs in the grid, a PCS sets the PCS islanding detection flag signal Switch_PCS to 1, and uploads a value of Switch_PCS to the central controller.

S440: Determine whether Switch_CC is 1. Switch_CC indicates an islanding detection flag signal delivered by the central controller to each PCS. Switch_CC is set to 1 in the off-grid state, and Switch_CC is set to 0 in the on-grid state. If Switch_CC is 1, step S450 is performed. If Switch_CC is 0, step S410 is performed.

S450: Set Switch_off to 1, where Switch_off is an on/off-grid switching command, Switch_off is set to 1 in the off-grid state, and Switch_off is set to 0 in the on-grid state. If the PCS islanding detection flag signal Switch_PCS is 1 or received Switch_CC delivered by the central controller of the system is 1, the PCS immediately enters an on/off-grid switching process, and sets the on/off-grid switching command Switch_off to 1. Switch_off is used to drive a PCC controller to freeze an on-grid CCM controller, enable the VCM controller, switch a value of $V_{out,m}$, and latch a reference amplitude and an initial phase value of a VCM voltage.

S460: Latch an amplitude and a phase of $V_{out,CCM}$ at this moment, and use the amplitude and the phase as an initial amplitude and an initial phase of an off-grid VCM voltage reference value.

Specifically, in a CCM running process of the PCS, an extraction module extracts a fundamental wave amplitude $E_{out,CCM}$ and a phase $\theta_{out,CCM}$ that are of $V_{out,CCM}$. When Switch_off is set to 1, that is, when the PCS enters the on/off-grid switching process, a latch records information about the fundamental wave amplitude and the phase that are of $V_{out,CCM}$ at this moment. The information about the fundamental wave amplitude and the phase that are of $V_{out,CCM}$ at the moment is input to a voltage reference generator module in a VCM, and the fundamental wave amplitude and the phase are used as the initial amplitude and the initial phase of the reference voltage.

S470: Freeze the on-grid CCM controller, enable the off-grid VCM controller, add a voltage control reference $V_{out,ref}$ as a feedforward amount to an output variable of a current loop, generate an output variable $V_{out,VCM}$ of the VCM controller, and switch the PCS modulated wave from $V_{out,m}$ to $V_{out,VCM}$. The PCS control mode is switched to the VCM. For a method for calculating the modulated wave $V_{out,m}$ used to generate the PWM pulse in this state, refer to the method for calculating the control voltage $V_{out,m}$ in the VCM mode in the algorithm 300, or the method for calculating the second control voltage in step S205. Details are not described herein again.

S480: Separately transit the amplitude and the phase of the reference voltage $V_{out,ref}$ to rated values based on $E_{out,VSG}$ and $\omega_{out,VSG}$ that are output by a VSG control loop. This step is performed by the reference voltage generator in the VCM controller shown in FIG. 3. For a method for calculating an amplitude $E_{out,ref}$ and a phase $\theta_{out,ref}$ that are of the reference voltage $V_{out,ref}$, refer to the method for calculating the reference voltage $V_{out,ref}$ in the first time period in the algorithm 300, or the method for transiting the output reference voltage of the converter apparatus from the first control voltage to the rated voltage in the first time period in step S240. Details are not described herein again.

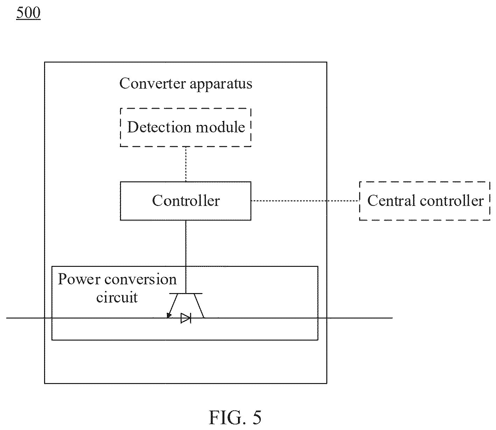

FIG. 5 is a diagram of a converter apparatus 500 according to an embodiment of this application. As shown in FIG. 5, the converter apparatus includes a controller and a power conversion circuit. One end of the power conversion circuit is connected to a direct current power supply (not shown in the figure), and the other end is connected to an alternating current power supply (not shown in the figure). The power conversion circuit converts a direct current into an alternating current under an action of an output voltage of the controller. The controller is configured to implement functions of the controllers in the algorithms 300 and 400 or implement the method 200. The controller outputs a voltage to the power conversion circuit based on a status of the converter apparatus. Specifically, if the converter apparatus is in an on-grid state, the controller outputs a voltage $V_{out,CCM}$ in a current control mode to the power conversion circuit. If the converter apparatus is in an off-grid state, the controller outputs a voltage $V_{out,CCM}$ in a voltage control mode to the power conversion circuit.

For example, the controller stores a computer program, and the computer program may implement the functions of the controllers in the algorithms 300 and 400 or implement the method 200.

In a possible implementation, the controller receives indication information from a detection module, and obtains the status of the converter apparatus.

In a possible implementation, the controller receives indication information from a central controller, and obtains the status of the converter apparatus.

In this embodiment of this application, the converter apparatus may further include the detection module. Specifically, if detecting that a power failure occurs in an alternating current power grid, the detection module sends first indication information to the controller, and the controller determines, based on the first indication information, that the power failure occurs in the alternating current power grid, where the converter apparatus is in the off-grid state. If there are a plurality of converter apparatuses in a power supply system, the detection module may further send second indication information to the central controller, and the central controller sends the first indication information to a controller corresponding to each converter apparatus, so that the controller of each converter apparatus in the power supply system switches from the current control mode to the voltage control mode.

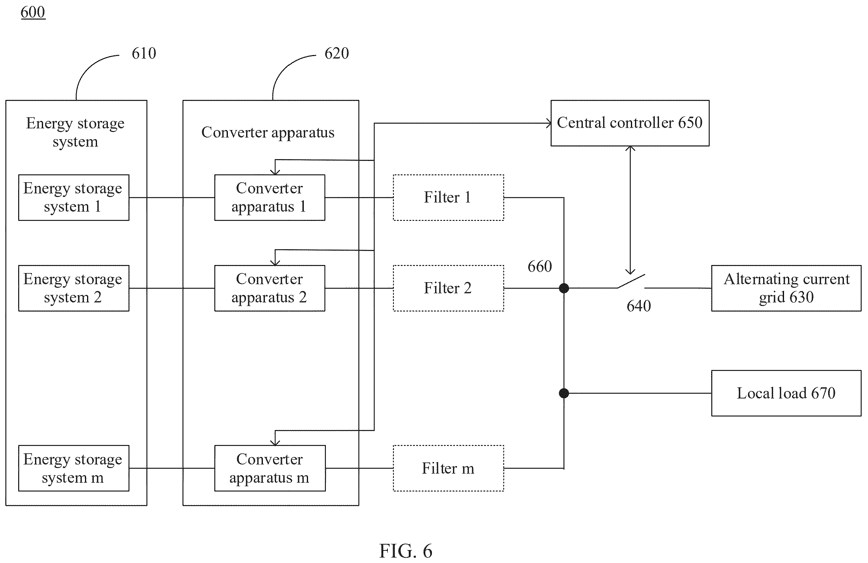

FIG. 6 is a diagram of a power supply system 600 according to an embodiment of this application. As shown in FIG. 6, the power supply system 600 includes an energy storage system 610, a plurality of converter apparatuses 620, an alternating current power grid 630, an on-grid switch 640, a central controller 650, a point of common coupling (point of common coupling, PCC) 660, and a local load 670. Alternating current ends of the plurality of converter apparatuses are connected in parallel to the point of common coupling, and direct current ends are connected to the energy storage system. The point of common coupling is connected to the local load, and the point of common coupling is connected to the alternating current power grid via the on-grid switch. Further, the power supply system 600 may further include a filter, each converter apparatus corresponds to one filter, and the plurality of converter apparatuses are connected in parallel at the point of common coupling 160 via the filter, to form a converter apparatus cluster.

It should be noted that, in this embodiment of this application, the converter apparatus 620 is the converter apparatus in FIG. 5, and can implement the functions in the foregoing methods 200 to 400.

In some examples, the energy storage system includes a multi-battery system and/or a photovoltaic power generation unit.

In this embodiment of this application, the central controller may communicate with the converter apparatus, or may communicate with the on-grid switch. For example, if the foregoing application scenario is a microgrid scenario, the central controller is a microgrid central controller. Alternatively, if the foregoing application scenario is an energy storage station scenario, the central controller is an energy storage station controller.

The central controller may establish communication with the on-grid switch. Specifically, the on-grid switch may receive a command from the central controller of the system to be closed or opened. When detecting that a power failure occurs in a utility grid, the on-grid switch may actively open, and notify the central controller.

The central controller may establish communication with the plurality of converter apparatuses. Specifically, the central controller may receive an islanding detection flag signal sent by each converter apparatus. If islanding detection flag signals of one or more of the converter apparatuses indicate that the converter apparatus has determined an islanding state of the power supply system, a status of an on/off-grid switch and an islanding detection result are reviewed. If the status of the on/off-grid switch is opened or the islanding detection result shows that the power supply system is in the islanding state, the central controller sends an on/off-grid switching command to each converter apparatus in the power supply system.

If a detection module in the converter apparatus determines that the power failure occurs in the alternating current power grid, that is, the power supply system is in the islanding state, or the on/off-grid switching command is received from the central controller, the converter apparatus performs control switching. For a specific switching method, refer to the method 200. Details are not described herein again.

It should be understood that the converter apparatus in this application may be used in a new energy microgrid or an electrochemical energy storage station, or may be used in another field.

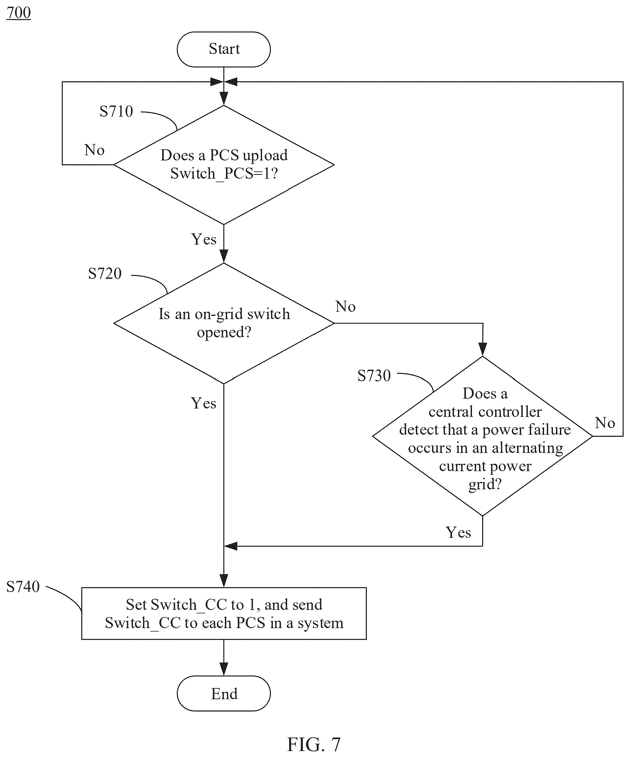

FIG. 7 is a flowchart of a control algorithm 700 of a central controller according to an embodiment of this application. As shown in FIG. 7, for ease of description, a converter apparatus that establishes communication with the central controller is a PCS.

S710: Determine whether a PCS uploads Switch_PCS=1. All PCSs upload their own Switch_PCS signals to the central controller, and the central controller monitors and determines the signals in real time. If there is the PCS uploading Switch_PCS = 1, step S720 is performed. If there is no PCS uploading Switch_PCS = 1, step S710 is performed.

S720: Determine whether a status of an on-grid switch is opened. If a received Switch_PCS signal of a PCS is 1, islanding is reviewed, and whether the PCS is in the opened state is determined based on a status feedback of the on-grid switch. If the status of the on-grid switch is opened, step S740 is performed. If the status of the on-grid switch is closed, step S730 is performed.

S730: Determine whether the central controller detects that a power failure occurs in an alternating current power grid. If a received Switch_PCS signal of a PCS is 1 and the on-grid switch is not opened, it is determined whether the central controller detects that the power failure occurs in the alternating current power grid. If it is detected that the power failure occurs in the alternating current power grid, step S740 is performed. If it is not detected that the power failure occurs in the alternating current power grid, step S710 is performed.

S740: Set a value of Switch_CC to 1, and send Switch_CC to each PCS in the power supply system. If determining that the on-grid switch is opened or detecting that the power failure occurs in the grid, the central controller determines that the power supply system needs to perform on/off-grid switching, sets the value of Switch_CC to 1, and delivers Switch_CC to each PCS in the system. After detecting that the value of Switch_CC changes to 1, each PCS immediately performs on/off-grid switching.

In the foregoing solution, this avoids an overall on/off-grid switching failure of a cluster caused by a failure of other PCSs to accurately determine an islanding state when the system achieves power balance after some PCSs first switch to an off-grid VCM for operation.

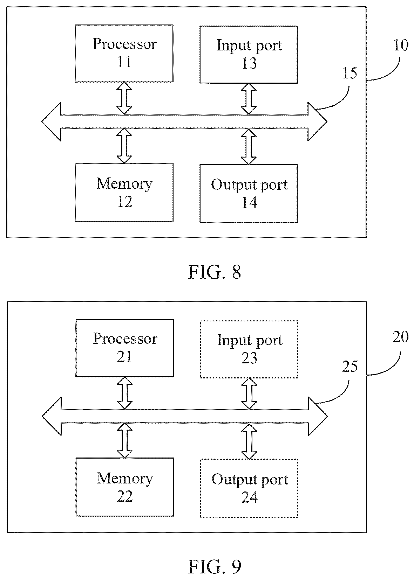

FIG. 8 is a diagram of a controller 10 according to an embodiment of this application. As shown in FIG. 8, the controller 10 may be a device that participates in control switching, or may be a chip or a circuit, for example, a chip or a circuit that may be disposed in the foregoing device that participates in control switching.

The apparatus 10 may include a processor 11 (that is, an example of a processing unit) and a memory 12. The memory 12 is configured to store instructions, and the processor 11 is configured to execute the instructions stored in the memory 12, so that the apparatus 10 implements the steps performed by the device that performs control switching in the corresponding method in FIG. 2.

Further, the apparatus 10 may further include an input port 13 and an output port 14. Further, the processor 11, the memory 12, the input port 13, and the output port 14 may communicate with each other through an internal connection path, to transfer a control and/or data signal. The memory 12 is configured to store a computer program. The computer program may be used to implement the algorithms in FIG. 3 and FIG. 4. The processor 11 may be configured to invoke the computer program from the memory 12 and run the computer program, to control the input port 13 to receive a signal, control the output port 14 to send a signal, and complete the steps of the controller in the foregoing methods. The memory 12 may be integrated into the processor 11, or the memory 12 and the processor 11 may be disposed separately.

In a possible implementation, if the controller 10 is the device, the input port 13 is a receiver, and the output port 14 is a transmitter. The receiver and the transmitter may be same physical entities or different physical entities. When the receiver and the transmitter are the same physical entities, the physical entities may be collectively referred to as transceivers.

In a possible implementation, if the controller 10 is the chip or the circuit, the input port 13 is an input interface, and the output port 14 is an output interface.

In an implementation, it may be considered that functions of the input port 13 and the output port 14 are implemented by using a transceiver circuit or a dedicated transceiver chip. It may be considered that the processor 11 is implemented by using a dedicated processing chip, processing circuit, or processor, or a universal chip.

In another implementation, it may be considered that the device provided in this embodiment of this application is implemented by using a general-purpose computer. To be specific, program code for implementing functions of the processor 11, the input port 13, and the output port 14 is stored in the memory 12, and a general-purpose processor implements the functions of the processor 11, the input port 13, and the output port 14 by executing the code in the memory 12.

It should be understood that, in this embodiment of the present invention, the processor 11 may be a central processing unit (Central Processing Unit, "CPU" for short). The processor 11 may further be another general-purpose processor, a digital signal processor (DSP), an application-specific integrated circuit (ASIC), a field programmable gate array (FPGA), another programmable logic device, discrete gate or transistor logic device, or a discrete hardware component, or the like. The general-purpose processor may be a microprocessor, or the processor may be any conventional processor or the like.

The memory 12 may include a read-only memory and a random access memory, and provides the processor 11 with data and instructions. A part of the memory 12 may further include a nonvolatile random access memory. For example, the memory 12 may further store information about a device type.

In addition to a data bus, a bus 15 may further include a power bus, a control bus, a status signal bus, and the like. However, for clear descriptions, various types of buses in the figure are marked as the bus 15 in the figure.

In an implementation process, each step of the foregoing methods may be completed by using an integrated logical circuit of hardware in the processor 11 or instructions in a form of software. The steps of the method disclosed with reference to embodiments of the present invention may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, a register, or the like. The storage medium is located in the memory 12, and the processor 11 reads information in the memory 12 and completes, in combination with hardware of the processor 11, the actions or processing processes performed by the device that performs control switching in the foregoing methods 200 to 400. To avoid repetition, details are not described herein again.

For concepts, explanations, detailed descriptions, and other steps of the apparatus 10 that are related to the technical solutions provided in embodiments of this application, refer to the descriptions of the content in the foregoing methods or other embodiments. Details are not described herein again.

FIG. 9 is a schematic diagram of a central controller 20 according to an embodiment of this application. As shown in FIG. 9, the central controller 20 may be a device, or may be a chip or a circuit, for example, a chip or a circuit that may be disposed in the foregoing central controller.

The apparatus 20 may include a processor 21 and a memory 22. The memory 22 is configured to store instructions, and the processor 21 is configured to execute the instructions stored in the memory 22, so that the apparatus 20 implements the steps performed by the central controllers in FIG. 1 to FIG. 7.

Further, the apparatus 20 may further include an input port 23 and an output port 24. Further, the processor 21, the memory 22, the input port 23, and the output port 24 may communicate with each other through an internal connection path, to transfer a control and/or data signal. The memory 22 is configured to store a computer program. The computer program may be used to implement the algorithm FIG. 7. The processor 21 may be configured to invoke the computer program from the memory 22 and run the computer program, to control the input port 23 to receive a signal, control the output port 24 to send a signal, and complete the steps of the central controller in the foregoing solution. The memory 22 may be integrated into the processor 21, or the memory 22 and the processor 21 may be disposed separately.

In a possible implementation, if the central controller 20 is the device, the input port 23 is a receiver, and the output port 24 is a transmitter. The receiver and the transmitter may be same physical entities or different physical entities. When the receiver and the transmitter are the same physical entities, the physical entities may be collectively referred to as transceivers.

In a possible implementation, if the central controller 20 is the chip or the circuit, the input port 23 is an input interface, and the output port 24 is an output interface.

In an implementation, it may be considered that functions of the input port 23 and the output port 24 are implemented by using a transceiver circuit or a dedicated transceiver chip. It may be considered that the processor 21 is implemented by using a dedicated processing chip, processing circuit, or processor, or a universal chip.

In another implementation, it may be considered that a communication device provided in this embodiment of this application is implemented by using a general-purpose computer. To be specific, program code for implementing functions of the processor 21, the input port 23, and the output port 24 is stored in the memory 22, and a general-purpose processor implements the functions of the processor 21, the input port 23, and the output port 24 by executing the code in the memory 22.

It should be understood that, in this embodiment of the present invention, the processor 21 may be a central processing unit (Central Processing Unit, "CPU" for short). The processor 21 may further be another general-purpose processor, a digital signal processor (DSP), an application-specific integrated circuit (ASIC), a field programmable gate array (FPGA), another programmable logic device, discrete gate or transistor logic device, or a discrete hardware component, or the like. The general-purpose processor may be a microprocessor, or the processor may be any conventional processor or the like.

The memory 22 may include a read-only memory and a random access memory, and provides the processor 21 with data and instructions. A part of the memory 22 may further include a nonvolatile random access memory. For example, the memory 22 may further store information about a device type.

In addition to a data bus, a bus 25 may further include a power bus, a control bus, a status signal bus, and the like. However, for clear descriptions, various types of buses in the figure are marked as the bus 25 in the figure.

In an implementation process, each step of the foregoing methods may be completed by using an integrated logical circuit of hardware in the processor 21 or instructions in a form of software. The steps of the method disclosed with reference to embodiments of the present invention may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, a register, or the like. The storage medium is located in the memory 22, and the processor 21 reads information in the memory 22 and completes, in combination with hardware of the processor 21, the actions or processing processes performed by the central controller in the foregoing methods. To avoid repetition, details are not described herein again.

For concepts, explanations, detailed descriptions, and other steps of the apparatus 20 that are related to the technical solutions provided in embodiments of this application, refer to the descriptions of the content in the foregoing methods or other embodiments. Details are not described herein again.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of modules. Some or all of the modules may be selected based on an actual requirement to achieve the objectives of the solutions of embodiments.

In addition, function modules in embodiments of this application may be integrated into one processing unit, each of the modules may exist alone physically, or two or more modules are integrated into one unit.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (Read-Only Memory, ROM), a random access memory (Random Access Memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A converter apparatus, wherein the converter apparatus comprises a controller and a power conversion circuit, a first end of the power conversion circuit is connected to an output end of the controller, a second end of the power conversion circuit is configured to connect to the energy storage system, and a third end of the power conversion circuit is configured to connect to the alternating current power grid;

   the controller is configured to receive power grid scheduling information, wherein the power grid scheduling information indicates the converter apparatus to switch from an on-grid control mode to an off-grid control mode, the on-grid control mode is controlling the converter apparatus to convert a direct current output by the energy storage system into an alternating current and connect the alternating current to the alternating current power grid, and the off-grid control mode is controlling the converter apparatus to convert the direct current output by the energy storage system into the alternating current and supply power to a local load, wherein the alternating current output by the converter apparatus is not connected to the alternating current power grid;
   the controller is further configured to obtain an output voltage of the converter apparatus at a first moment, wherein the first moment is a moment at which the converter apparatus switches from the on-grid control mode to the off-grid control mode or a moment at which the power grid scheduling information is received, and a difference that is between the output voltage of the converter apparatus at the first moment and an output voltage of the converter apparatus in the off-grid control mode and that is within preset time is less than a specified threshold;
   the controller is further configured to obtain the output voltage of the converter apparatus in the off-grid control mode based on the output voltage of the converter apparatus at the first moment; and

the power conversion circuit is configured to: convert, based on the output voltage of the converter apparatus in the off-grid control mode, the direct current output by the energy storage system into the alternating current, and supply power to the local load.

2. The apparatus according to claim 1, wherein the determining the output voltage of the converter apparatus in the off-grid control mode based on the output voltage of the converter apparatus at the first moment comprises:

the controller sets an output reference voltage of the converter apparatus based on a first control voltage, wherein the first control voltage is a control voltage of the converter apparatus at the first moment, and the control voltage is used to control the output voltage of the converter apparatus;
the controller obtains a feedback parameter, wherein the feedback parameter comprises a voltage and a current of the alternating current output by the converter apparatus;
the controller determines the second control voltage based on the output reference voltage of the converter apparatus and the feedback parameter; and
the controller determines the output voltage of the converter apparatus in the off-grid control mode based on the second control voltage.

3. The apparatus according to claim 2, wherein the generating the second control voltage based on the output reference voltage of the converter apparatus and the feedback parameter comprises:

the controller inputs the output reference voltage of the converter apparatus and the feedback parameter to a current loop and a voltage loop to generate an intermediate voltage; and
the controller adds the output reference voltage of the converter apparatus and the intermediate voltage to generate the second control voltage.

4. The apparatus according to claim 2 or 3, wherein the controller is further configured to gradually set the output reference voltage of the converter apparatus to a rated voltage at a specified step, and the rated voltage is an output voltage obtained when the converter apparatus operates stably in the off-grid control state.

5. The apparatus according to any one of claims 1 to 4, wherein the converter apparatus further comprises:

a detection module, wherein the detection module is configured to: detect whether a power failure occurs in the alternating current power grid; and
if the detection module detects that the power failure occurs in the alternating current power grid, send power grid fault information to the controller, wherein the power grid fault information indicates that the power failure occurs in the alternating current power grid and indicates the converter apparatus to switch from the on-grid control mode to the off-grid control mode.

6. The apparatus according to claim 5, wherein if detecting that the power failure occurs in the alternating current power grid, the detection module sends the power grid fault information to a central controller; and
the central controller indicates, based on the power grid fault information, another converter apparatus connected to the alternating current power grid to switch a control mode.

7. An on/off-grid switching control method, applied to a converter apparatus, wherein the method comprises:

receiving power grid scheduling information, wherein the power grid scheduling information indicates the converter apparatus to switch from the on-grid control mode to the off-grid control mode, the on-grid control mode is controlling the converter apparatus to convert a direct current output by an energy storage system into an alternating current and connect the alternating current to an alternating current power grid, and the off-grid control mode is controlling the converter apparatus to convert the direct current output by the energy storage system into the alternating current and supply power to a local load, wherein the alternating current output by the converter apparatus is not connected to the alternating current power grid;
obtaining an output voltage of the converter apparatus at a first moment, wherein the first moment is a moment at which the converter apparatus switches from the on-grid control mode to the off-grid control mode or a moment at which the power grid scheduling information is received, and a difference that is between the output voltage of the converter apparatus at the first moment and an output voltage of the converter apparatus in the off-grid control mode and that is within preset time is less than a specified threshold; and
regulating the output voltage of the converter apparatus in the off-grid control mode based on the output voltage of the converter apparatus at the first moment.

8.  The method according to claim 7, wherein the determining the output voltage of the converter apparatus in the off-grid control mode based on the output voltage of the converter apparatus at the first moment comprises:

    setting an output reference voltage of the converter apparatus based on a first control voltage, wherein the first control voltage is a control voltage of the converter apparatus at the first moment, and the control voltage is used to control the output voltage of the converter apparatus;
    obtaining a feedback parameter, wherein the feedback parameter comprises a voltage and a current of the alternating current output by the converter apparatus;
    determining the second control voltage based on the output reference voltage of the converter apparatus and the feedback parameter; and
    determining the output voltage of the converter apparatus in the off-grid control mode based on the second control voltage.

9.  The method according to claim 8, wherein the generating the second control voltage based on the output reference voltage of the converter apparatus and the feedback parameter comprises:

    generating an intermediate voltage after the output reference voltage of the converter apparatus and the feedback parameter pass through a current loop and a voltage loop; and
    adding the output reference voltage of the converter apparatus and the intermediate voltage to generate the second control voltage.

10. The method according to claim 8 or 9, wherein the method further comprises:
    gradually setting the output reference voltage of the converter apparatus to a rated voltage at a specified step, wherein the rated voltage is an output voltage obtained when the converter apparatus operates stably in the off-grid control state.

11. The method according to any one of claims 7 to 10, wherein the method further comprises:
    obtaining power grid fault information, wherein the power grid fault information indicates that a power failure occurs in the alternating current power grid and indicates the converter apparatus to switch from the on-grid control mode to the off-grid control mode.

12. A power supply system, comprising:

    a plurality of converter apparatuses, an energy storage system, an alternating current power grid, an on-grid switch, a central controller, and a point of common coupling, wherein
    alternating current ends of the plurality of converter apparatuses are connected in parallel to the point of common coupling, direct current ends are connected to the energy storage system, the plurality of converter apparatuses have at least two control modes, the two control modes are an on-grid control mode and an off-grid control mode, the on-grid control mode is controlling the converter apparatus to convert a direct current output by the energy storage system into an alternating current and connect the alternating current to the alternating current power grid, and the off-grid control mode is controlling the converter apparatus to convert the direct current output by the energy storage system into the alternating current and supply power to a local load, wherein the alternating current output by the converter apparatus is not connected to the alternating current power grid;
    the point of common coupling is connected to the alternating current power grid via the on-grid switch; and
    the central controller establishes communication connections to the plurality of converter apparatuses and the on-grid switch.

13. The system according to claim 12, wherein if the central controller indicates that the on-grid switch is opened, the central controller is further configured to indicate the plurality of converter apparatuses to switch control modes.

14. The system according to claim 12 or 13, wherein the plurality of converter apparatuses are further configured to detect whether a power failure occurs in the alternating current grid.

15. The system according to claim 14, wherein the plurality of converter apparatuses switch the control modes if the power failure occurs in the alternating current grid.

16. The system according to claim 14 or 15, wherein the plurality of converter apparatuses are further configured to indicate the central controller to open the on-grid switch if the power failure occurs in the alternating current grid.

FIG. 1

FIG. 2

FIG. 3

400

Start

S410 — A controller is in a CCM mode

S420 — Does a detection module detect that a power failure occurs in an alternating current power grid?

No →

S440 — Is Switch_CC set to 1?

No →

Yes ↓ (S420)

S430 — Set Switch_PCS to 1, and upload Switch_PCS to a central controller

Yes ↓ (S440)

S450 — Set Switch_off to 1

S460 — Latch an amplitude and a phase of $V_{out,CCM}$ at this moment, and use the amplitude and the phase as an initial amplitude and an initial phase of an off-grid VCM voltage reference value

S470 — Enable an off-grid VCM controller, add a voltage control reference $V_{out,ref}$ as a feedforward amount to an output variable of a current loop, and generate an output variable $V_{out,VCM}$ of the VCM controller

S480 — Separately transit the amplitude and the phase of the reference voltage $V_{out,ref}$ to rated values based on $E_{out,VSG}$ and $\omega_{out,VSG}$ that are output by a VSG control loop

End

FIG. 4

500

Converter apparatus

Detection module

Controller .............. Central controller

Power conversion
circuit

FIG. 5

FIG. 6

EP 4 648 247 A1

700

Start

S710

No

Does a PCS upload
Switch_PCS=1?

Yes

S720

Is an on-grid switch
opened?

No

Yes

S730

Does a
central controller
detect that a power failure
occurs in an alternating
current power
grid?

No

Yes

S740

Set Switch_CC to 1, and send
Switch_CC to each PCS in a system

End

FIG. 7

Processor
11

Input port
13

15

10

Memory
12

Output port
14

FIG. 8

Processor
21

Input port
23

25

20

Memory
22

Output port
24

FIG. 9

## INTERNATIONAL SEARCH REPORT

| International application No. |
| --- |
| **PCT/CN2023/131685** |

### A. CLASSIFICATION OF SUBJECT MATTER

H02J3/24(2006.01)i

According to International Patent Classification (IPC) or to both national classification and IPC

### B. FIELDS SEARCHED

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT, ENTXT, VEN, CNKI, IEEE: 并网, 离网, 孤岛, 切换, 平滑, 参考, 电压, 初始, 初值, grid, on, off, island+, switch, reference, voltage, initial

### C. DOCUMENTS CONSIDERED TO BE RELEVANT

| Category* | Citation of document, with indication, where appropriate, of the relevant passages | Relevant to claim No. |
| --- | --- | --- |
| PX | CN 116073399 A (HUAWEI DIGITAL ENERGY TECHNOLOGY CO., LTD.) 05 May 2023 (2023-05-05)<br>claims 1-16, and description, paragraphs 105-223, and figures 1-7 | 1-16 |
| X | CN 113346531 A (WINDSUN SCIENCE & TECHNOLOGY CO., LTD.) 03 September 2021 (2021-09-03)<br>description, paragraphs 29-50, and figures 1-3 | 1-16 |
| X | CN 110112780 A (CHIZHOU UNIVERSITY) 09 August 2019 (2019-08-09)<br>description, paragraphs 66-82, and figures 1-5 | 1-16 |
| X | CN 110556861 A (SOLAX POWER NETWORK TECHNOLOGY (ZHEJIANG) CO., LTD.) 10 December 2019 (2019-12-10)<br>description, paragraphs 3 and 50-108, and figures 1-2 | 12-16 |
| A | CN 110556861 A (SOLAX POWER NETWORK TECHNOLOGY (ZHEJIANG) CO., LTD.) 10 December 2019 (2019-12-10)<br>entire document | 1-11 |
| A | CN 103078545 A (DONGHUA UNIVERSITY et al.) 01 May 2013 (2013-05-01)<br>entire document | 1-16 |

☑ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 January 2024** | **16 January 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/131685** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2017072593 A1 (GOEL, Rakesh et al.) 04 May 2017 (2017-05-04)<br>entire document | 1-16 |

Form PCT/ISA/210 (second sheet) (July 2022)

**INTERNATIONAL SEARCH REPORT**
Information on patent family members

International application No.

**PCT/CN2023/131685**

| Patent document cited in search report | | | Publication date (day/month/year) | Patent family member(s) | | | Publication date (day/month/year) |
|---|---|---|---|---|---|---|---|
| CN | 116073399 | A | 05 May 2023 | None | | | |
| CN | 113346531 | A | 03 September 2021 | None | | | |
| CN | 110112780 | A | 09 August 2019 | None | | | |
| CN | 110556861 | A | 10 December 2019 | CN | 110556861 | B | 30 July 2021 |
| CN | 103078545 | A | 01 May 2013 | CN | 103078545 | B | 25 February 2015 |
| WO | 2017072593 | A1 | 04 May 2017 | IN | 201503463 | I1 | 18 March 2016 |

Form PCT/ISA/210 (patent family annex) (July 2022)

**REFERENCES CITED IN THE DESCRIPTION**

**Patent documents cited in the description**

- CN 202310036905